Europäisches Patentamt

European Patent Office

Office européen des brevets

(19)

(11) EP 0 543 726 B1

(12) FASCICULE DE BREVET EUROPEEN

(45) Date de publication et mention
de la délivrance du brevet:
07.02.1996 Bulletin 1996/06

(51) Int Cl.⁶: F16K 47/08, F01D 17/14

(21) Numéro de dépôt: 92403100.8

(22) Date de dépôt: 18.11.1992

(54) **Soupape avec siège crénelé**

Ventil mit einem geschlitzten Ventilsitz

Valve with a serrated seat

(84) Etats contractants désignés:
AT BE CH DE DK ES FR GB GR IT LI LU NL SE

(30) Priorité: 19.11.1991 FR 9114237

(43) Date de publication de la demande:
26.05.1993 Bulletin 1993/21

(73) Titulaire: GEC ALSTHOM SA
F-75116 Paris (FR)

(72) Inventeurs:
• Detanne, François
F-75017 Paris (FR)
• Vincent de Paul, Michel
F-60300 Avilly St-Leonard (FR)

(74) Mandataire: Vigand, Privat et al
F-75008 Paris (FR)

(56) Documents cités:
EP-A- 0 023 172          EP-A- 0 156 672
EP-A- 0 200 509          DE-A- 3 138 459
FR-A- 2 187 083          GB-A- 1 007 437
US-A- 3 857 542

## Description

Soupape avec siège crénelé

L'invention se rapporte aux soupapes et plus particulièrement aux soupapes de réglage des turbines à vapeur.

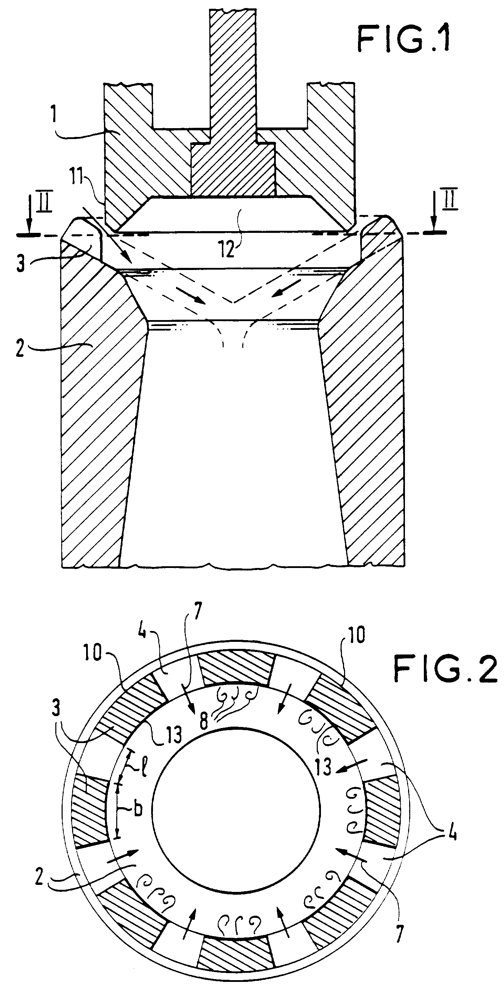

Ces soupapes sont utilisées pour régler le débit de vapeur qui arrive à la turbine. Aux levées faibles ou intermédiaires, l'énergie dissipée dans ces soupapes, est très importante. Aux faibles levées où des vitesses supersoniques sont atteintes au voisinage de la zone où le clapet vient en contact avec le siège, des ondes de choc et des décollements du fluide des parois de la soupape se produisent et peuvent entraîner des vibrations du clapet. A toutes les levées, la focalisation (voir fig.1) de la nappe de courant sur l'axe de symétrie de la soupape, va produire des fluctuations de pression importantes, elles peuvent atteindre jusqu'à 50 % de la pression moyenne, qui se propagent en aval et peuvent dans certains cas, provoquer des dommages dans les tuyauteries.

Une solution pour résoudre ces problèmes consiste à diviser la nappe d'écoulement en plusieurs petits jets. Ceci peut être réalisé avec un siège comportant un collet d'étranglement dans le pourtour duquel sont réparties des créneaux séparés par des dents comme cela est décrit par exemple, dans le certificat d'utilité français n° 76 12647, ou dans la demande DOS-31 38459.

Plusieurs grosses turbines à vapeur de part le monde sont équipées de telles soupapes, mais il est apparu qu'un certain niveau vibratoire persistait à charge partielle.

La présente invention concerne une soupape produisant des fluctuations de pression modérées, sans vibration aux charges partielles, caractérisée en ce que la paroi de l'extrémité du clapet face à la partie crénelée en position fermée du clapet, a une forme convexe formant avec la paroi interne de chaque dent, un canal qui s'évase du sommet au pied de la dent, le contact du clapet avec le siège devant être à une distance de la base de la partie crénelée comprise entre 0,25 et 0,5 fois la largeur $\ell$ du créneau.

La présente invention sera mieux comprise à la lumière de la description qui va suivre dans laquelle :

.    la figure 1 représente une soupape connue

.    la figure 2 représente une coupe horizontale de la soupape de la figure 1

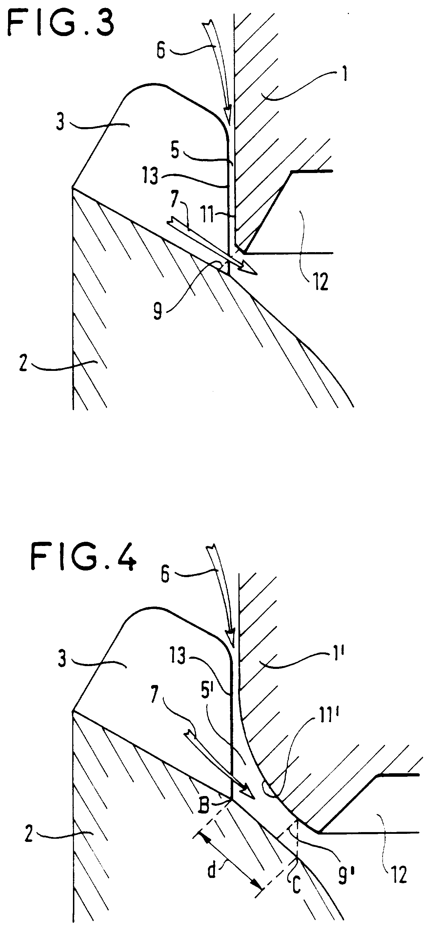

.    la figure 3 représente l'écoulement au voisinage de la sortie des créneaux du siège de la soupape de la figure 1.

.    la figure 4 représente la géométrie de l'ensemble créneaux-clapet selon l'invention en position levée du clapet.

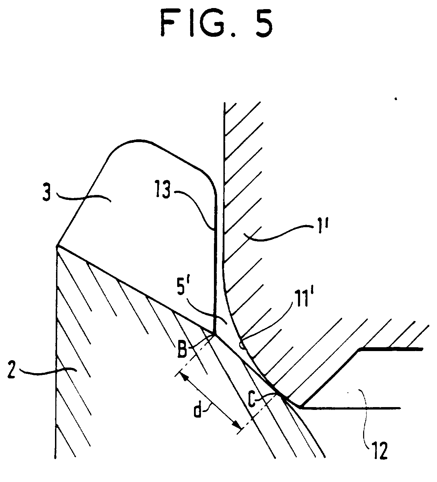

La figure 5 représente l'ensemble créneaux clapet en position fermée du clapet.

Les figures 1 et 2 représentent une soupape connue qui comporte un clapet 1 venant reposer sur un siège 2. Le clapet 1 est symétrique de révolution autour d'un axe vertical et se termine par une surface 11 entourant un évidement en creux 12. Sur le siège 2 est disposée une partie crénelée 10 constituée de dents 3 séparées par des créneaux 4. Ces dents 3 disposées circulairement ont une paroi interne 13 qui est une portion de cylindre d'axe vertical (même axe que le clapet) et entourent le clapet 1 lorsqu'il repose sur le siège 2. La largeur $\ell$ des créneaux est inférieure à la largeur b des parois internes 13 des dents 3.

Lorsque le clapet 1 est à l'intérieur de la partie crénelée 10 (figures 2 et 3), une certaine quantité de fluide 6 va passer par le canal 5 existant entre le clapet 1 et les dents du siège 2. L'écoulement principal 7 passe par les créneaux 4. La largeur du canal 5 est très faible; c'est seulement un jeu nécessaire pour éviter le frottement du clapet sur les dents 3.

En aval des dents, va exister une zone d'eau morte qui fluctue à cause d'un échappement non symétrique des tourbillons 8 à partir des deux bords de la dent 3; ceci va entraîner une fluctuation de pression qui va remonter dans le canal 5 et entraîner des efforts instationnaires sur le clapet 1, d'autant plus importants que la largeur du canal 5 est faible, et donc des vibrations. Le col 9 c'est-à-dire la section minimale entre le clapet 1 et le siège 2 est très proche de la section de sortie des créneaux 4.

Sur les figures 4 et 5 on a représenté un créneau 4 et l'extrémité du clapet 1' suivant l'invention (à comparer avec la figure 3). Seul le clapet 1' est modifié. Il est comme le clapet 1, symétrique de révolution autour de son axe. L'extrémité 11 du clapet 1' en position fermée face aux parois internes 13 des dents 3 a une forme convexe. On constate que le canal 5' entre le clapet 1' et les dents 3 de la partie crénelée 10 a une forme très différente du canal 5. Si dans la partie supérieure la largeur reste faible, celle-ci va en s'élargissant dans la partie inférieure; on constate qu'en position semi-ouverte du clapet (figure 4) une telle forme du canal 5' élimine les vibrations liées aux fluctuations des pressions générées par l'échappement des tourbillons. Cette forme a cependant l'inconvénient d'éloigner le col 9' de la section de sortie des créneaux; et si ce col 9' est suffisamment éloigné on constate que pour des rapports k, de la pression aval à la pression amont, faibles, pour lesquels les jets deviennent supersoniques à partir du col, ces différents jets reforment une nappe d'écoulement continue; on sait en effet qu'un jet supersoniques s'évase d'autant plus que le rapport de pression k est faible et que sa largeur dans la section où l'écoulement devient sonique est grande.

Dans ces conditions l'effet du siège 2 à créneaux dont la fonction est de donner des jets séparés est annulée et les problèmes initiaux liés à ces nappes d'écoulement supersonique réapparaissent. Pour éviter ces phénomènes, il était nécessaire que la distance d entre la base B des créneaux 4 et le contact C du clapet 1 sur le siège 2 soit comprise entre 0,25 et 0,5 fois la largeur $\ell$ du créneau, cette dernière devant être inférieure à la largeur b de la dent (3).

Pour

$$\frac{d}{\ell} < 0,25,$$

le canal n'est pas suffisamment évasé et il y a un risque d'avoir encore certaines vibrations comme dans le cas des soupapes à jeu constant entre clapet et partie crénelée.

Pour

$$\frac{d}{\ell} > 0,5$$

ou

$$\frac{\ell}{b} > 1$$

la nappe d'écoulement risque de se reformer.

## Revendications

1. Soupape comportant un clapet (1, 1') coopérant avec un siège (2) muni d'une partie crénelée (10) disposée en amont et autour de la partie du siège (2), sur laquelle vient reposer le clapet (1, 1') ladite partie crénelée étant constituée de dents (3) séparées par des créneaux (4), les parois internes (13) des dents (3) étant des portions d'un cylindre d'axe vertical, la largeur $\ell$ des créneaux étant inférieure à la largeur b des parois internes (13) des dents (3), caractérisée en ce que la paroi de l'extrémité (11') du clapet (1') face à la partie crénelée (10) en position fermée du clapet (1'), a une forme convexe formant avec la paroi interne (13) de chaque dent (3) un canal (5') qui s'évase du sommet au pied de la dent (3), le contact C du clapet (1) avec le siège (2) devant être à une distance d de la base B de la partie crénelée (10) comprise entre 0,25 et 0,5 fois la largeur $\ell$ du créneau (4).

## Patentansprüche

1. Ventil mit einem Ventilglied (1, 1') und einem damit zusammenwirkenden Ventilsitz (2), der einen Nutenbereich (10) vor der Zone des Ventilsitzes (2) aufweist, auf die das Ventilglied (1, 1') aufsetzt, und um diese Zone herum, wobei der Nutenbereich von Zähnen (3) gebildet wird, die durch Nuten (4) voneinander getrennt sind, und die Innenwände (13) der Zähne (3) Abschnitte eines Zylinders mit senkrechter Achse sind, wobei die Breite 1 der Nuten kleiner als die Breite b der Innenwände (13) der Zähne (3) ist, dadurch gekennzeichnet, daß die Wand des Endes (11') des Ventilglieds (1') gegenüber dem Nutenbereich (10) bei geschlossenem Ventil (1') eine konvexe Form besitzt, die mit der Innenwand (13) jedes Zahns (3) einen Kanal (5') bildet, der sich von der Spitze bis zum Fuß des Zahns (3) erweitert, und daß der Kontakt (C) des Ventilglieds (1) mit dem Sitz (2) in einem Abstand d von der Basis (B) des Nutenbereichs (10) erfolgt, der zwischen 0,25 und 0,5 mal so breit wie die Breite 1 der Nut (4) ist.

## Claims

1. A valve including a valve member (1, 1') co-operating with a seat (2) provided with a crenellated portion (10) disposed upstream and around the portion of the seat (2) on which the valve member (1, 1') rests, said crenellated portion being constituted by teeth (3) separated by gaps (4), the inside walls (13) of the teeth (3) being portions of a vertical axis cylinder, the width $l$ of the gaps being less than the width $\underline{b}$ of the inside walls (13) of the teeth (3), the valve being characterized in that the end wall (11') of the valve member (1') facing the crenellated portion (10) when the valve member (1') is in its closed position is convex in shape, co-operating with the inside wall (13) of each tooth (3) to form a channel (5') that flares from top to bottom of the tooth (3), the point of contact C between the valve member (1) and the seat (2) being at a distance $\underline{d}$ from the base B of the crenellated portion (10) lying in the range 0.25 times to 0.5 times the width $l$ of the gap (4).

FIG.1

FIG.2

# FIG.3

# FIG.4

# FIG. 5